# FASCICULE DE BREVET EUROPEEN

(11) **EP 1 829 195 B1**
(45) Date de publication et mention de la délivrance du brevet: **01.07.2009**
(21) Numéro de dépôt: 05818048.0
(22) Date de dépôt: 17.11.2005
(51) Int. Cl.: H02M 1/12

(54) **CONVERTISSEUR DE COURANT A DOUBLE REGULATION DE TENSION**
ZWEI-SPANNUNGS-STEUER-STROM-UMSETZER
DUAL VOLTAGE CONTROL CURRENT CONVERTER

(30) Priorité: 08.12.2004 FR 0413081
(43) Date de publication de la demande: 05.09.2007
(73) Titulaire: Fintescu, Nicolas Dan, 78350 Les Loges en Josas (FR)
(72) Inventeur: Fintescu, Nicolas Dan, 78350 Les Loges en Josas (FR)
(74) Mandataire: Hammond, William
(86) Numéro de dépôt international: PCT/FR2005/002853
(87) Numéro de publication internationale: WO 2006/061472

(56) Documents cités:
- WO-A-20/04006416
- US-A- 4 698 740
- US-A- 4 779 185

## Description

La présente invention se rapporte aux convertisseurs d'énergie, et en particulier aux convertisseurs électroniques de courant-courant ou courant-tension, utilisés par exemple pour des feux lumineux de signalisation sur les pistes des aéroports. Ces convertisseurs sont alimentés par des réseaux de courant efficace imposé fournis par des générateurs de courant à thyristors à réglage d'angle d'allumage ou des générateurs de courants sinusoïdaux.

L'invention a pour objet un dispositif électronique, dénommé « CONVERTISSEUR DE COURANT A DOUBLE REGULATION DE TENSION », ci-dessous en abrégé « Convertisseur CDRT ». Etant alimenté par une source de courant alternatif de forme d'onde quelconque, ce convertisseur délivre à sa sortie une tension continue égale à une valeur préréglée, produisant en même temps une tension d'entrée avec une forme d'onde similaire et en phase avec celle du courant d'alimentation. Cette invention assure, par son principe de fonctionnement, une valeur minimale pour la valeur efficace de la tension d'entrée et cela sans rejet d'harmoniques sur la ligne d'alimentation.

Il est connu que certains convertisseurs, alimentés par des réseaux de courant, avec ou sans microprocesseurs, et avec variations de la fréquence de découpage et/ou du cycle tₒₙ/t_{off}, produisent des tensions continues en sorties, mais dont leurs tensions d'entrées présentent, par leur principe de fonctionnement, des valeurs efficaces très importantes et des harmoniques dans le réseau d'alimentation. Celles-ci réduisent considérablement le nombre de convertisseurs pouvant être insérés dans une ligne de courant et entraînent par conséquent une mauvaise utilisation du générateur d'alimentation du courant de la ligne. Un exemple de ces convertisseurs est montré par US 4698740

Il est également connu par le document WO 2004/006416 l'utilisation des convertisseurs survolteurs, sous l'appellation de correcteurs de facteur de forme ou «Power Factor Corector» qui, alimentés par une source de tension alternative sinusoïdale, délivrent à leur sortie une tension continue et dont le courant d'entrée est en phase avec sa tension d'entrée, ceci afin d'obtenir un facteur de puissance cosϕ approchant l'unité. Le procédé employé pour ces convertisseurs consiste en l'utilisation de convertisseurs classiques « survolteurs ». De par leur principe même de fonctionnement, ces convertisseurs alimentés en tension ne peuvent pas être utilisés pour des convertisseurs alimentés en courant. L'invention se rapporte à un dispositif électronique alimenté par une source de courant selon la revendication 1.

Dans le convertisseur CDRT, la puissance de sortie, absorbée par la charge, doit être égale à la valeur moyenne de la puissance d'entrée. Comme ce convertisseur est d'une part relié à un réseau de courant qui est imposé, que d'autre part sa tension de sortie est fixée, et que le courant de sortie est imposé par le consommateur, seule la tension d'entrée est la grandeur réglable. Pour satisfaire l'égalité des puissances entrée-sortie il est donc nécessaire d'assurer la régulation de cette tension d'entrée. Elle doit présenter la même forme d'onde que celle du courant d'alimentation et en même temps être en phase avec celui-ci.

Le principe de fonctionnement faisant l'objet de cette invention consiste en deux boucles de régulation agissant simultanément, la première étant une boucle de régulation de la tension d'entrée en phase avec le courant d'alimentation, et la deuxième, à laquelle la première est subordonnée, une boucle de régulation de la tension continue de sortie.

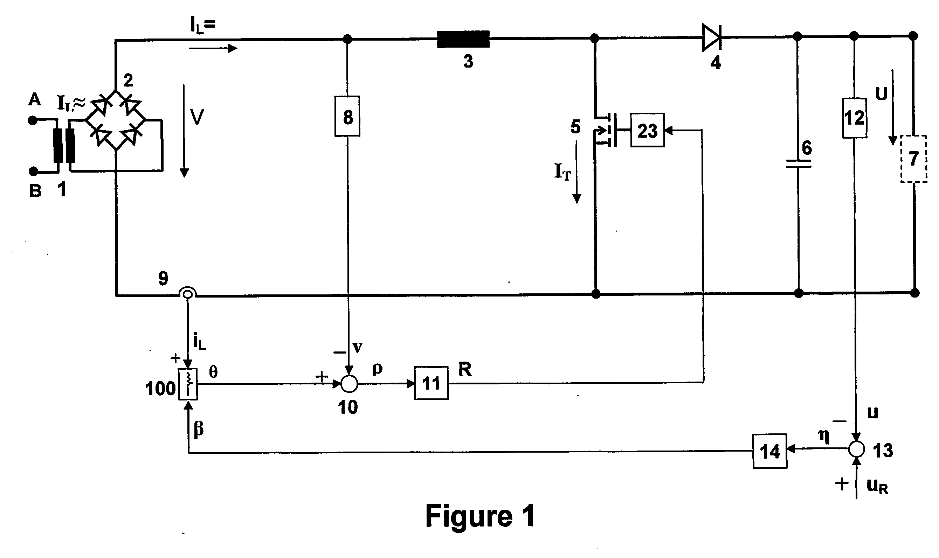

Dans un premier mode de fonctionnement décrit dans le schéma de la fig. 1, le courant (I_{L}=), obtenu après redressement par le redresseur (2) du courant alternatif (I_{L}≈), directement à partir du réseau d'alimentation, ou fourni par le secondaire d'un transformateur de courant (1) dont l'enroulement primaire (A-B) est inséré dans le réseau d'alimentation, parcourt l'inducteur (3) et retourne, soit directement par le commutateur (5) quand celui-ci est commandé, soit par la diode (4) et le condensateur (6) et la charge (7) en sortie du convertisseur.

Le régulateur (14) de la tension de sortie (U) reçoit à son entrée le signal d'erreur (η) issu de l'additionneur (13) qui additionne deux grandeurs de signes opposés, une étant la valeur de consigne (_{UR}) de la tension de sortie et l'autre la mesure de cette tension de sortie (u). La sortie dudit régulateur (14) agit par l'opérateur (100) sur une boucle de régulation subordonnée de la tension d'entrée (V) en multipliant ou en divisant par son signal de sortie (β) le signal de sortie (i_{L}) issu du traducteur de mesure (9) du courant redressé (I_{L}=) d'alimentation du convertisseur. Cette opération est fonction de la charge et du rapport choisi entre l'entrée et la sortie dudit traducteur (9) de mesure du courant. Le régulateur de la tension d'entrée (11) reçoit à son entrée le signal d'erreur (ρ) issu de l'additionneur (10) qui additionne deux grandeurs de signe opposé, l'une (θ) étant le signal de sortie dudit opérateur (100), et l'autre le signal de mesure (v) de la tension d'entrée redressée (V) issu du traducteur de mesure (8). La sortie (R) dudit régulateur (11) de la tension d'entrée (V) commande le dit commutateur (5) par une interface classique de commande rapprochée (23). Le rapport cyclique tₒₙ/T de commande du commutateur (5) détermine la tension (U) de sortie du convertisseur.

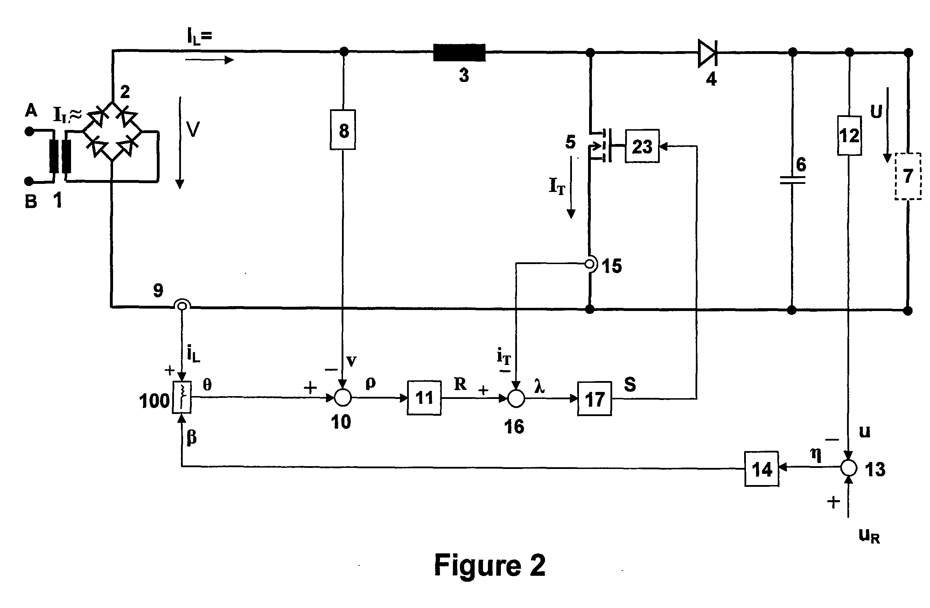

Pour rendre l'optimisation du comportement dynamique plus aisée, une boucle interne de régulation de courant peut être introduite, comme représenté sur la figure 2, entre la sortie du régulateur (11) de la tension d'entrée et le commutateur (5). Le signal de sortie (R) de ce régulateur (11) est comparé dans l'additionneur (16) avec le signal (i_{T}) issu du traducteur mesure (15) du courant qui passe dans le commutateur (5). Le signal d'erreur (λ) issu de cet additionneur (16) commande le régulateur de courant (17). Son signal (S) de sortie commande le dit commutateur (5) par une interface classique de commande rapprochée (23).

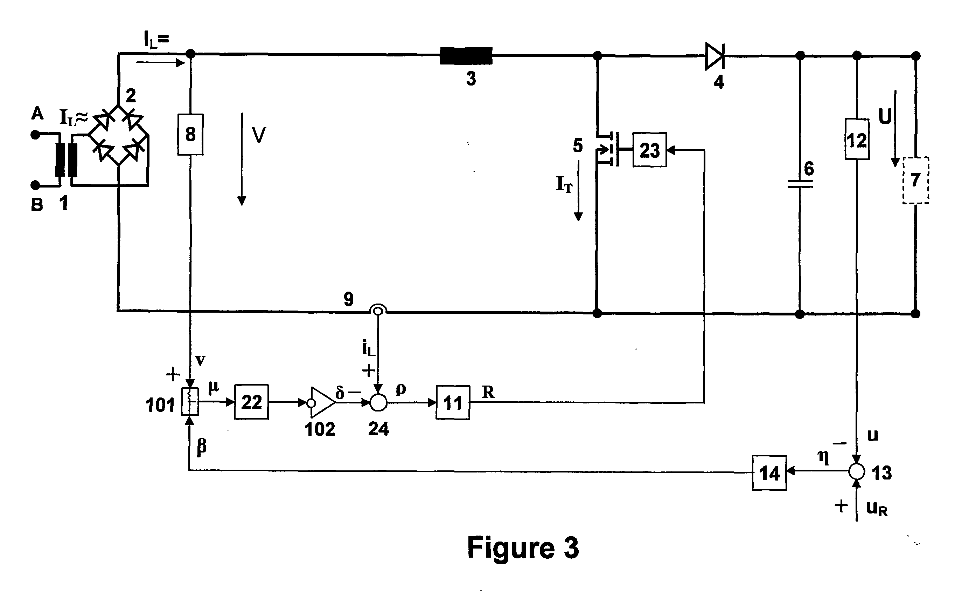

Dans un deuxième mode de fonctionnement, décrit dans le schéma de la figure 3, le courant (I_{L}=), obtenu après redressement par le redresseur (2) du courant alternatif (I_{L}≈), ou directement à partir réseau d'alimentation, ou bien encore fourni par le secondaire d'un transformateur de courant (1) dont l'enroulement primaire (A-B) est inséré dans le réseau d'alimentation, parcourt l'inducteur (3) et retourne, soit directement par le commutateur (5) quand celui-ci est commandé, soit par la diode (4) et le condensateur (6) et la charge (7) en sortie du convertisseur.

Le régulateur (14) de la tension de sortie (U) reçoit à son entrée un signal d'erreur (η) issu de l'additionneur (13) qui additionne deux grandeurs de signes opposés, une étant la valeur de consigne (u_{R}) pour la tension de sortie et l'autre la mesure de cette tension de sortie (u). Ce régulateur (14) de la tension de sortie (U) commande une boucle de régulation subordonnée de la tension d'entrée (V). La sortie dudit régulateur (14) agit par l'opérateur (101) sur une boucle de régulation subordonnée de la tension d'entrée (V) en multipliant ou en divisant par son signal de sortie (β) le signal de sortie (v) issu du traducteur de mesure (8) de la tension d'entrée (V). Cette opération est fonction de la charge et du rapport choisi entre l'entrée et la sortie dudit traducteur (8) de mesure de la tension d'entrée (V)

Le régulateur de la tension d'entrée (11) qui agit sur le commutateur (5) reçoit à son entrée l'erreur (ρ) obtenue par l'addition dans l'additionneur (24) de la référence pour la tension d'entrée, qui pour avoir la même forme d'onde que celle du courant (I_{L}=) d'alimentation redressé va être le signal (i_{L}) lui-même issu du traducteur de courant (9), et du signal (µ) de sortie de l'opérateur (101) avec un signe inversé par l'inverseur (102). Le signal (R) de sortie dudit régulateur (11) de la tension d'entrée (V) commande le dit commutateur (5) par une interface classique de commande rapprochée (23). Le rapport cyclique tₒₙ/T de commande du commutateur (5) détermine la tension (U) de sortie du convertisseur.

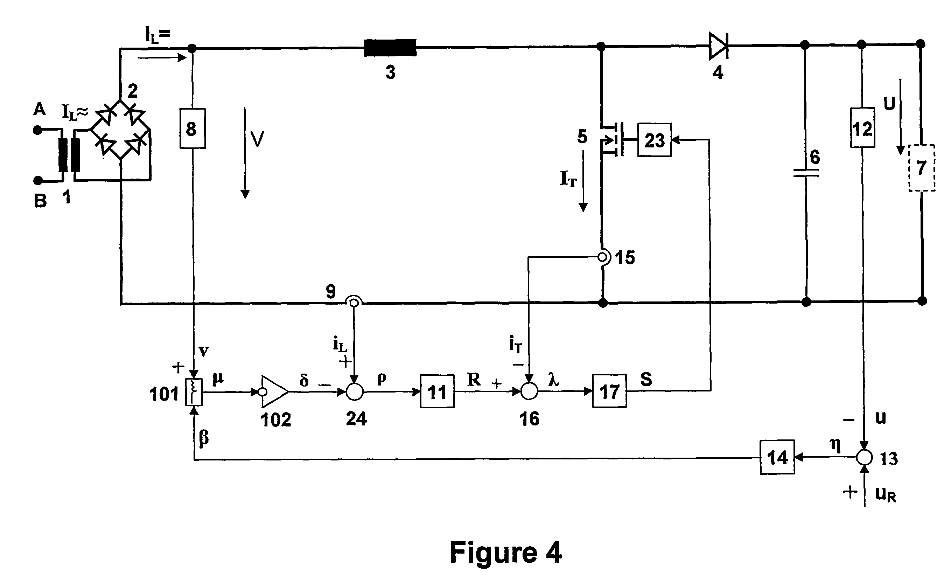

Comme pour le premier mode de fonctionnement décrit plus haut, afin de rendre l'optimisation du comportement dynamique plus aisée, une boucle interne de régulation de courant peut être introduite, comme représenté sur la figure 4, entre la sortie du régulateur (11) de la tension d'entrée et le commutateur (5). Le signal (R) de sortie de ce régulateur (11) est comparé dans l'additionneur (16) avec le signal (i_{T}) issu du traducteur de mesure (15) du courant (I_{T}) qui passe par le commutateur (5). Le signal d'erreur (λ) de sortie de cet additionneur (16) commande le régulateur de courant (17). Le signal (S) de sortie de ce dernier commande ledit commutateur (5) par l'interface (23) .

Comme suite aux descriptions ci-dessus il en résulte que le «Convertisseur CDRT» peut délivrer jusqu'aux valeurs maximales pouvant être fournies par le générateur de courant tout en assurant un fonctionnement optimal sans puissance réactive. La tension de sortie nulle est obtenue quand le commutateur (5) est commandé en permanence, le courant traverse alors uniquement l'inducteur (3). Ce-ci entraîne également une tension nulle à l'entrée. La tension maximale a lieu quand le commutateur (5) ne conduit pas. La gamme des tensions et courants peut également être changée par le biais du rapport de transformation du transformateur de courant d'entrée. Par exemple pour des charges demandant de grands courants sous de faibles tensions, le rapport de transformation pourra être plus petit que 1 et inversement.

La mise en oeuvre des procédés décrits suivant cette invention est réalisable sans l'utilisation de microprocesseurs ou composants sensibles aux variations de température, ce qui rend l'intégration de ces convertisseurs plus aisée dans des équipements destinés, par exemple, aux balisages des pistes d'aéroports.

Un exemple d'application non limitatif, du principe décrit précédemment sur la figure 2 est présenté sur la figure (5). Le courant (I_{L}=), obtenu après redressement par le redresseur (2) du courant alternatif (I_{L}≈), ou directement à partir du réseau d'alimentation, ou bien encore fourni par le secondaire d'un transformateur de courant (1) dont l'enroulement primaire (A-B) est inséré dans le réseau d'alimentation, parcourt l'inducteur (3) et retourne, soit directement par l'inducteur (26) en série avec et le commutateur (5) quand celui-ci est commandé, soit par la diode (4) et le condensateur (6) et la charge (7) en sortie du convertisseur.

La régulation de la tension d'entrée est obtenue à l'aide du régulateur de tension (11) qui reçoit à son entrée l'écart (ρ) entre la mesure de la tension d'entrée (v) issue d'un traducteur de tension (8) , par exemple un diviseur de tension, et une consigne (δ) de la tension d'entrée qui doit avoir la même forme d'onde que celle du courant (I_{L}) d'alimentation. Ainsi, cette consigne est prise à la sortie du traducteur de courant (9), un shunt par exemple, suivi de l'opérateur (100) et le filtre (22), comme décrit ci-après. La sortie (R) de ce régulateur (11) agit sur la commande du commutateur (5) par l'intermédiaire d'une boucle de régulation subordonnée de courant. Cette boucle comprend le régulateur de courant (17) qui reçoit à son entrée le signal d'erreur (λ). Ce signal provient de l'addition dans l'additionneur (16) de la référence de courant qui est la sortie (R) du régulateur (11) et du signal (i_{T}) issu du traducteur (15) de mesure, un shunt par exemple, du courant (I_{T}) qui traverse le commutateur (5) . Comme le courant d'alimentation peut prendre différentes valeurs, le régulateur de tension de sortie (14), pour maintenir la tension de sortie à la valeur imposée, contrôle uniquement l'amplitude du signal de mesure de ce courant d'entrée issu du traducteur de mesure (9) et garde ainsi inchangée sa forme d'onde. L'action du régulateur (14) a lieu, dans cet exemple, par division du signal de mesure (i_{L}) du courant d'entrée (I_{L}) par le signal de sortie (β) dudit régulateur (14). Ainsi, par exemple, si la tension de sortie diminue sous la valeur de référence (u_{R}) , alors la sortie (β) du régulateur (14) augmente. Comme le signal (i_{L}) en provenance du traducteur de courant (9) est la référence du régulateur (11), sa division par ce signal (β) va entraîner la diminution de la sortie (R) dudit régulateur (11). Comme le signal (R) est la référence pour le courant du régulateur (17), le temps «tₒₙ» de conduction du commutateur (5) va également diminuer, et fera ainsi augmenter la valeur moyenne du courant dirigé vers la charge en sortie. La diode (4) empêche le condensateur (6) de se décharger à travers le commutateur (5) pendant son temps tₒₙ de conduction.

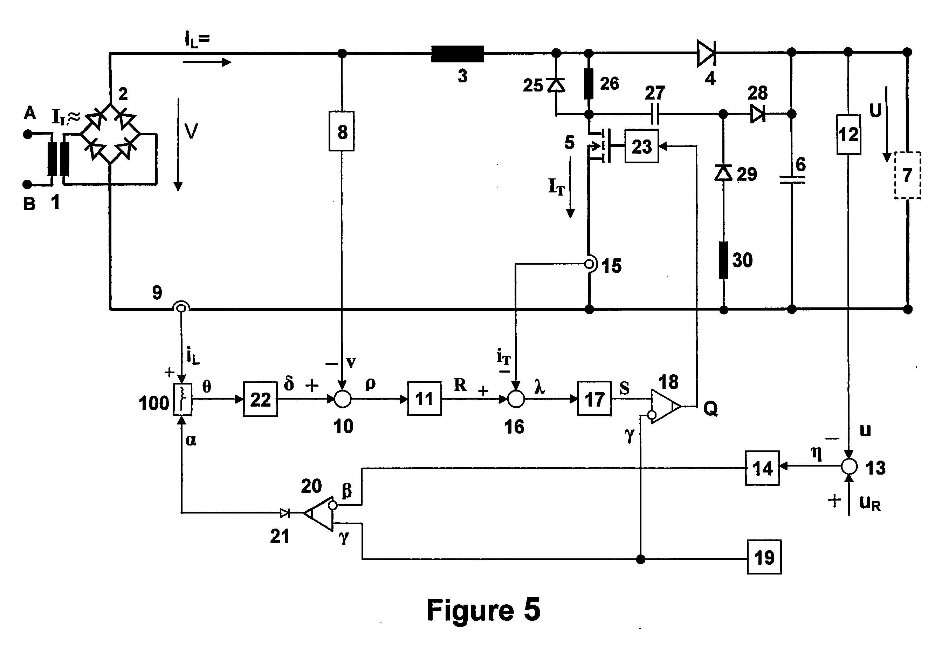

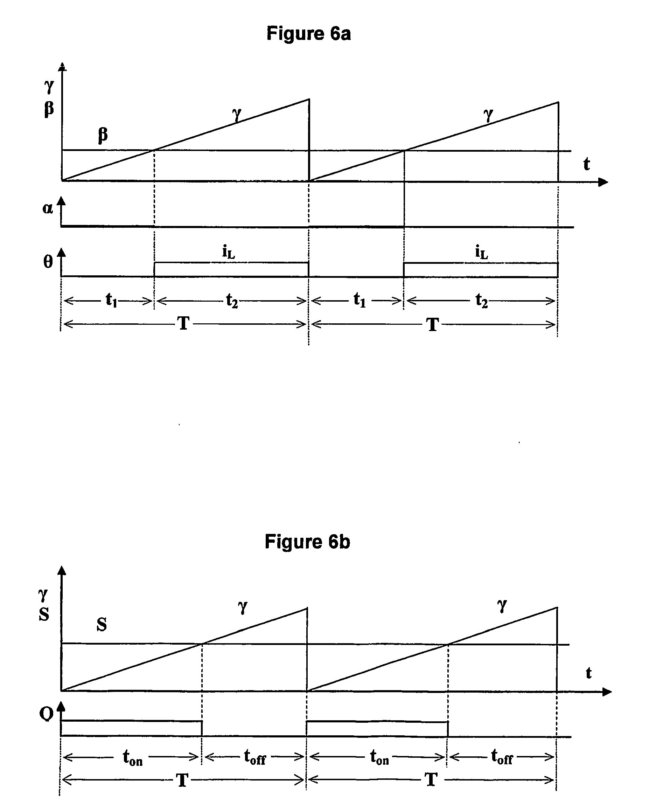

La division de la mesure de courant d'alimentation (i_{L}) du convertisseur par le signal (β) est effectuée par modulation de largeur d'impulsion (P.W.M.), à l'aide du comparateur (20) dont la sortie est en collecteur ouvert {représenté symboliquement par la diode (21) dans la figure 5} et qui vient hacher le signal de sortie du traducteur de courant (9). Ce comparateur reçoit à ses entrées le signal (β) et un signal en dents de scie (γ) fourni par un générateur de dents de scie (19). Le signal (α) de sortie de ce comparateur, comme représenté dans la figure 6a, est le résultat de l'intersection du signal (γ) en dents de scie avec le signal (β) de sortie du régulateur (14). Ce signal (α) vaut donc zéro pendant le temps «t₁» durant lequel le signal (β) est plus grand que le signal en dents de scie (γ). Comme le comparateur (20) a sa sortie en collecteur ouvert, et étant relié directement à la sortie du traducteur (9) de mesure du courant, comme représenté schématiquement sur la figure 5. Le signal (θ) de sortie de l'opérateur (100), figure 6a, prend la valeur θ = i_{L}*α*t₁/T = i_{L}*0 = 0 pendant le temps t₁ et θ = i_{L}*α*t₂/T = i_{L}*t₂/T pendant le temps t₂. Ce signal haché est moyenné par le filtre passe bas (22) de réjection des fréquences élevées. Pour diminuer le filtre et augmenter la bande passante de ce diviseur, il est utile que la période T = tₒₙ+ t_{off} du générateur de dents de scie (19) soit beaucoup plus petite que la période du courant d'alimentation du convertisseur.

La sortie (S) du régulateur (17) est comparée à l'aide du comparateur (18) avec un signal en dents de scie, qui peut être le même signal (γ) provenant du générateur de dents de scie (19), comme représenté sur les figures 5 et 6b. Le signal (Q) de sortie de ce comparateur commande le commutateur (5) par une interface classique de commande rapprochée (23). Le cycle de commande du commutateur (5) est composé d'une part d'un temps «tₒₙ» pendant lequel le signal de sortie (S) du régulateur (17) étant plus grand que le signal (γ), le commutateur (5) est conducteur et la sortie du convertisseur n'est plus alimentée par le courant d'entrée. D'autre part ce cycle de commande est composé d'un temps «t_{off}» pendant lequel, le signal de sortie (S) du régulateur (17) étant plus petit que le signal (γ), le commutateur (5) est arrêté et le courant d'alimentation traverse la diode (4) et alimente la charge en sortie. Durand le temps «tₒₙ» l'alimentation de la charge est assurée par le condensateur (6) qui se recharge ensuite pendant le temps «t_{off}». Le rapport des temps «tₒₙ» et «t_{off}» détermine ainsi la valeur de la tension (U) de sortie. Cette tension (U) est donc régulée par le régulateur (14) qui reçoit à son entrée le signal d'erreur de tension (η) issu de l'additionneur (13), qui additionne la mesure de la tension (u) issue du traducteur (12), un diviseur de tension résistif par exemple, avec un signal de référence (u_{R}). En fonction des caractéristiques de commutation du commutateur (5) un cycle entier tₒₙ + t_{off} peut durer par exemple 20 µs.

Cette régulation assure ainsi une forme d'onde de la tension d'entrée similaire et en phase avec l'onde du courant de ligne et une tension de sortie régulée à une valeur fixée, et cela indépendamment du courant absorbé par la charge.

Les pertes de commutation dans le commutateur (5) à la mise en conduction, dues au recouvrement de la diode (4) et du courant dans l'inducteur (3), sont éliminées par l'inducteur (26). A l'arrêt de la conduction du commutateur (5) le courant dans les inducteurs (3) et (26) passe d'abord par le condensateur (27) et la diode (28) vers le condensateur de sortie (6) et la charge (7). Quand la tension du condensateur (27), au point de jonction avec le commutateur (5), dépasse la tension de sortie des deux seuils de tension des diodes en série (27) et (28) le courant de l'inducteur (3) passe alors par la diode (4). Pendant cet intervalle de temps l'inductance (26) se décharge à travers la diode (25). L'inducteur (30) et la diode (29) assurent la décharge du condensateur (27) au début de la période de conduction du commutateur (5). Pour assurer un minimum de temps pour la charge et la décharge du condensateur (27), des conduction tₒₙ et t_{off} minimales peuvent être prévues dans la commande du commutateur (5).

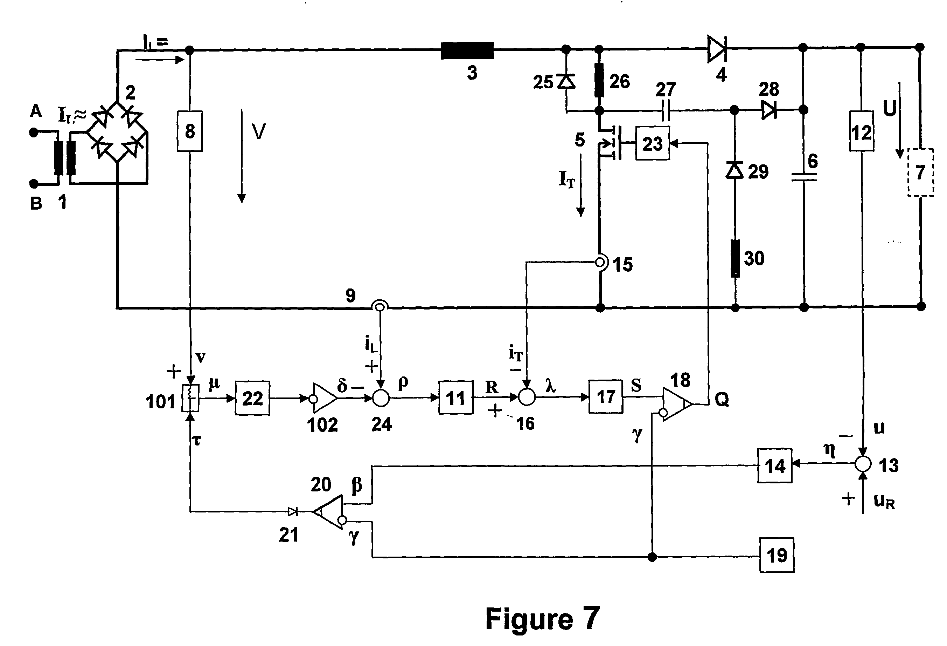

Un deuxième exemple d'application, non limitatif du principe décrit précédemment dans la figure 4 est présenté sur la figure 7. Le courant (I_{L}=), obtenu après redressement par le redresseur (2) du courant alternatif (I_{L}≈), ou directement à partir du réseau d'alimentation, ou bien encore fourni par le secondaire d'un transformateur de courant (1) dont l'enroulement primaire (A-B) est inséré dans le réseau d'alimentation, parcourt l'inducteur (3) et retourne, soit directement par l'inducteur (26) en série avec le commutateur (5), quand celui-ci est commandé, soit par la diode (4) et le condensateur (6) et la charge (7) en sortie du convertisseur.

La régulation de la tension d'entrée est obtenue à l'aide du régulateur de tension (11) qui reçoit à son entrée l'écart (ρ) issu de l'additionneur (24) qui additionne:
- le signal (-δ), qui représente la mesure de la tension (v) d'entrée issue du traducteur de tension (8), par exemple un diviseur de tension, suivi de l'opérateur (101), du filtre (22) et de l'inverseur de signe (102), comme décrit ci-après,
- avec une référence d'onde pour la tension devant avoir la même forme d'onde que celle du courant (I_{L}) d'alimentation du convertisseur, et qui sera donc le signal (i_{L}) pris à la sortie du traducteur de courant (9), comme par par exemple un shunt. La sortie (R) de ce régulateur (11) agit sur la commande du commutateur (5) par l'intermédiaire d'une boucle subordonnée de régulation de courant. Cette boucle comprend le régulateur de courant (17) qui reçoit à son entrée le signal d'erreur (λ). Ce signal provient de l'addition, dans l'additionneur (16), de la référence de courant qui est la sortie (R) du régulateur (11), et du signal (-i_{T}) issu du traducteur (15) de mesure de courant (I_{T}) qui traverse le commutateur (5) qui peut par exemple être un shunt. Comme le courant d'alimentation peut prendre différentes valeurs, le régulateur de tension de sortie (14), pour maintenir la tension de sortie à la valeur imposée, contrôle uniquement l'amplitude du signal de mesure de la tension d'entrée (v) issu du traducteur de mesure (8), et garde ainsi inchangée sa forme d'onde. L'action du régulateur (14) se traduit par la multiplication de ce signal (v) par le signal de sortie (β) dudit régulateur (14). Ainsi, par exemple, si la tension de sortie diminue sous la valeur de référence (u_{R}), alors la sortie (β) du régulateur (14) augmente. Comme le signal (v) issu du traducteur (8) est la mesure de la tension d'entrée, sa multiplication par ce signal (β) va entraîner la diminution du signal d'erreur (ρ) d'entrée du régulateur (11) et son signal de sortie (R). Comme ce dernier est la référence pour le régulateur de courant (17), le temps tₒₙ de conduction du commutateur (5) va diminuer également et augmenter ainsi la valeur moyenne du courant dirigé vers la charge. La diode (4) empêche le condensateur (6) de se décharger à travers le commutateur (5) pendant son temps tₒₙ de conduction.

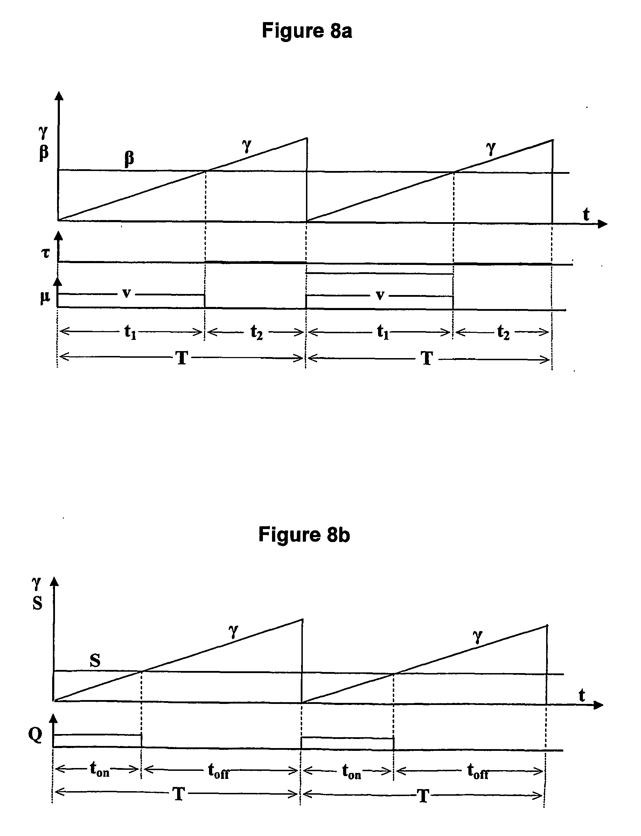

La multiplication de la mesure de la tension d'entrée (v) du convertisseur issue du traducteur de mesure (8) par le signal (β) est effectuée par modulation de largeur d'impulsion (P.W.M.) à l'aide du comparateur (20), à sortie en collecteur ouvert {représenté symboliquement par la diode (21)}, qui vient hacher le signal de sortie du traducteur de tension (8). ce comparateur reçoit à ses entrées le signal (β) et un signal en dents de scie (γ) fourni par un générateur de dents de scie (19). Le signal (τ) de sortie de ce comparateur, comme représenté sur la figure 8a, est le résultat de l'intersection du signal (γ) en dents de scie avec le signal (β) de sortie du régulateur (14). Ce signal (τ) vaut donc zéro pendant le temps «t₂» durant lequel le signal (β) est plus petit que le signal en dents de scie (γ). Comme le comparateur (20) a sa sortie en collecteur ouvert, et étant relié directement à la sortie du traducteur de mesure (8), comme représenté schématiquement sur la figure 7, le signal (µ) de sortie de l'opérateur (101), figure 8a, prend la valeur µ = τ*vᵢ = vᵢ*t₁/T pendant le temps t₁ et µ = τ*vᵢ = vᵢ*0 = 0 pendant le temps t₂. Ce signal haché passe dans le filtre passe bas (22) de réjection des fréquences élevées, suivi de l'inverseur de signe (102). Afin de diminuer le filtre et augmenter la bande passante de ce diviseur, il est utile que la période T = tₒₙ + t_{off} du générateur de dents de scie (19) soit beaucoup plus petite que la période du courant d'alimentation du convertisseur.

La sortie (S) du régulateur (17) est comparée à l'aide du comparateur (18) avec un signal en dents de scie, qui peut être le même signal (γ) provenant du générateur de dents de scie (19), comme représenté sur les figures 7 et 8b. Le signal (Q) de sortie de ce comparateur commande le commutateur (5) par une interface classique de commande rapprochée (23). Le cycle de commande du commutateur (5) est composé d'une part d'un temps «tₒₙ» pendant lequel, le signal de sortie (S) du régulateur (17) étant plus grand que le signal (γ), le commutateur (5) est conducteur et la sortie du convertisseur n'est plus alimentée par le courant d'entrée. D'autre part ce cycle de commande est composé d'un temps «t_{off}» pendant lequel, le signal de sortie (S) du régulateur (17) étant plus petit que le signal (γ), le commutateur (5) est arrêté et le courant d'alimentation traverse la diode (4) et alimente la charge en sortie. Durant le temps «tₒₙ» l'alimentation de la charge est assurée par le condensateur (6) qui se recharge pendant le temps «t_{off}». Le rapport des temps «tₒₙ» et «t_{off}» détermine ainsi la valeur de la tension de sortie. Cette tension de sortie est donc régulée par le régulateur (14) qui reçoit à son entrée le signal d'erreur de tension (η) issu de l'addition dans l'additionneur (13) de la mesure de la tension (u) issue du traducteur (12), un diviseur de tension résistif par exemple, avec un signal de référence (u_{R}). En fonction des caractéristiques de commutation du commutateur (5) un cycle entier tₒₙ + t_{off} peut durer par exemple 20 µs.

Cette régulation assure ainsi une forme d'onde de la tension d'entrée similaire et en phase avec l'onde du courant de ligne et une tension de sortie régulée à une valeur fixée, et cela indépendamment du courant absorbé par la charge.

Comme dans le mode d'application décrit précédemment les pertes de commutation dans le commutateur (5) à la mise en conduction, dues au recouvrement de la diode (4) et du courant dans l'inducteur (3), sont éliminées par l'inducteur (26). A l'arrêt de la conduction du commutateur (5) le courant dans les inducteurs (3) et (26) passe d'abord par le condensateur (27) et la diode (28) vers le condensateur de sortie (6) et la charge (7). Quand la tension du condensateur (27), au point de jonction avec le commutateur (5), dépasse la tension de sortie des deux seuils de tension des diodes en série (27) et (28) le courant de l'inducteur (3) passe alors par la diode (4). Pendant cet intervalle de temps l'inductance (26) se décharge à travers la diode (25). L'inductance (30) et la diode (29) assurent la décharge du condensateur (27) au début de la période de conduction du commutateur (5). Pour assurer un minimum de temps pour la charge et la décharge du condensateur (27), des conduction tₒₙ et t_{off} minimales peuvent être prévues dans la commande du commutateur (5).

Dans tous les modes d'application de l'invention la consigne pour la régulation de la tension de sortie peut être établie progressivement, soit de l'extérieur, soit liée au démarrage du générateur d'alimentation de la ligne et à ses caractéristiques transitoires.

Les régulateurs (11), (14) et (17) peuvent être de type PI ou PID, par hystérèse, par mode de glissement, par sortie comparée avec une dent de scie (par modulation de largeur d'impulsion) (P.W.M.) et autres. Les régulateurs peuvent être analogiques ou numériques.

Les commutateurs (5) dans les figures 1, 2, 3, 4, 5, et 7 peuvent être des transistors MOS, ou bipolaires ou d'autres commutateurs électroniques connus.

Des limitateurs des valeurs des sorties peuvent être prévues. Suivant le type de régulateur choisi on peut fonctionner à fréquence variable ou à fréquence fixe, cette dernière étant souvent préférée pour des raisons de compatibilité électromagnétiques et des filtres de réjection plus faciles à réaliser.

Compte tenu des non-linéarités introduites par le diviseur ou le multiplicateur, les performances des régulateurs peuvent dans certains cas être, améliorées par l'introduction de fonctions de linéarisation classiques.

Sur les figures 1 2, 3, 4, 5 et 6 ne sont pas représentés des circuits de filtrages HF, de réjection, de suppression de surtensions, etc. Ces éléments dépendent de l'environnement et du spécifique de l'utilisation et sont bien connus.

## Revendications

1. Dispositif électronique alimenté par une source de courant qui lui impose un courant de valeur et forme d'onde quelconque (i_{L}), **caractérisé en ce qu'**un régulateur (11) pour la tension d'entrée (V) impose à cette tension une forme d'onde identique à la forme d'onde dudit courant d'alimentation, dit courant constituant la référence de ce régulateur de la tension d'entrée et **en ce qu'**un deuxième régulateur (14) pour la tension de sortie (U) dudit dispositif électronique maintient la tension de sortie constante par variation de la tension d'entrée sous l'action du signal (B) de sortie de ce deuxième régulateur qui agit sur la référence du régulateur de la tension d'entrée.

2. Dispositif électronique selon la revendication 1, **caractérisé en ce que** (figure 1) :
- un pont redresseur (2) alimenté par un générateur de courant alternatif imposé de forme d'onde quelconque (i_{L}) alimente en courant redressé (I_{L}=), à travers un inducteur (3) suivi d'une diode (4), un condensateur de stockage d'énergie (6) en parallèle avec la charge (7) en sortie du pôle positif du convertisseur ;
- un traducteur de mesure (9) du courant redressé (I_{L}=) d'alimentation du convertisseur ;
- le deuxième régulateur (14) de la tension de sortie (U) reçoit à son entrée un signal (η) issu d'un additionneur (13) qui additionne deux grandeurs de signes opposés, une étant la valeur de consigne (u_{R}) pour la tension de sortie et l'autre la mesure (-u) de cette tension de sortie (U);
- un opérateur (100) qui divise ou multiplie le signal de sortie (i_{L}) dudit traducteur de mesure (9) du courant d'alimentation redressé (I_{L}=) par le signal (β) de sortie dudit régulateur (14) de la tension de sortie (U), division ou multiplication qui est fonction du rapport choisi entre l'entrée et la sortie dudit traducteur (9) de mesure du courant ;
- un additionneur (10) qui additionne deux grandeurs de signes opposés, une (θ) étant la sortie dudit opérateur (100), et l'autre la mesure (-v) de la tension d'entrée redressée (V) issue d'un traducteur de mesure (8) ;
- le signal (ρ) de sortie dudit additionneur (10) qui constitue l'entrée dudit régulateur (11) de la tension d'entrée (V) ;
- le signal (R) de sortie dudit régulateur (11) de la tension d'entrée (V) qui commande par une interface de commande rapprochée (23) un commutateur (5) dont l'émetteur/source est connecté au pôle zéro de la sortie du convertisseur et le collecteur/drain à l'anode de ladite diode (4).

3. Dispositif électronique selon la revendication 2 (figure 2), **caractérisé par le fait qu'**entre la sortie dudit régulateur (11) de la tension d'entrée (V) et l'interface de commande (23) du commutateur (5) est introduite une boucle de courant subordonnée, comprenant un régulateur de courant (17) dont sa sortie (S) commande ladite interface (23) et dont l'entrée reçoit un signal (λ) issu d'un additionneur (16) entre le signal (R) de sortie dudit régulateur (11) de la tension d'entrée et le signal (-i_{T}) de mesure du courant (I_{T}) qui passe par ledit commutateur (5).

4. Dispositif électronique selon la revendication 1, **caractérisé en ce que** (figure 3) :
- un pont redresseur (2) alimenté par un générateur de courant alternatif imposé de forme d'onde quelconque (I_{L}=)/ alimente en courant redressé (I_{L} =), à travers un inducteur (3), suivi d'une diode (4), et un condensateur de stockage d'énergie (6) en parallèle avec la charge (7) en sortie du pôle positif du convertisseur;
- un traducteur de mesure (8) de la tension d'entrée redressée (V)
- le deuxième régulateur (14) de la tension de sortie (U) reçoit à son entrée un signal (η) issu d'un additionneur (13) qui additionne deux grandeurs de signes opposés, une étant la valeur de consigne (u_{R}) pour la tension de sortie, et l'autre la mesure (-u) de cette tension de sortie (U) ;
- un opérateur (101) qui multiplie, ou divise le signal de sortie (v) dudit traducteur de mesure (8) pour la tension d'entrée (V) par le signal de sortie (β) dudit régulateur (14) de la tension de sortie (U), multiplication ou division qui est fonction du rapport choisi entre l'entrée et la sortie dudit traducteur (8) de la tension d'entrée (V) ;
- un additionneur (24), qui additionne deux grandeurs de signes opposés, une (-δ) étant le signal de sortie (µ) dudit opérateur (101) suivi d'un inverseur de signe (102), et l'autre étant la mesure (i_{L}) du courant (I_{L} =) d'alimentation redressé du convertisseur, mesure issue dudit traducteur de mesure (9);
- le signal (ρ) de sortie dudit additionneur (24) qui constitue l'entrée dudit régulateur (11) de la tension d'entrée (V) ;
- le signal (R) de sortie dudit régulateur (11) de la tension d'entrée (V) qui commande, par une interface de commande rapprochée (23), un commutateur (5) dont l'émetteur/source est connecté au pôle zéro de la sortie du convertisseur et son collecteur/drain à l'anode de ladite diode (4).

5. Dispositif électronique (figure 4) suivant la revendication 4, **caractérisé par le fait qu'**entre la sortie du régulateur (11) de la tension d'entrée (V) et l'interface de commande (23) du commutateur (5) est introduite une boucle de courant subordonnée, celle-ci comprenant un régulateur de courant (17) dont sa sortie (S) commande le dit commutateur (5) et dont l'entrée reçoit un signal (λ) issu d'un additionneur (16) entre la sortie (R) dudit régulateur de la tension d'entrée (11) et le signal (-i_{T}) de mesure du courant (I_{T}) qui passe par ledit commutateur (5).

6. Dispositif électronique selon la revendication 1 avec suppression des pertes de commutation, **caractérisé en ce que** (figure 5) :
- un pont redresseur double alternance (2) connecté sur la sortie d'un transformateur de courant (1), dont l'enroulement primaire (A-B) est inséré dans une ligne d'alimentation par un générateur de courant alternatif imposé de forme d'onde quelconque, alimente en courant redressé (I_{L}=), à travers un inducteur (3) suivi d'une diode (4) un condensateur de stockage d'énergie (6) en parallèle avec la charge (7) en sortie du pôle positif du convertisseur ;
- un transistor (5) ayant son émetteur/source relié au pôle zéro de la sortie du convertisseur;
- le deuxième régulateur de tension (14) pour la régulation de la tension (U) de sortie du convertisseur reçoit à son entrée un signal d'erreur (η), issu d'un additionneur (13) qui additionne la consigne (u_{R}) de la tension de sortie (U) avec la mesure (u), de cette tension de sortie (U), mesurée à l'aide d'un traducteur de tension (12), comme par exemple un diviseur résistif de tension ;
- un générateur (19) de dents de scie ;
- comparateur (20 21) avec sortie par collecteur ouvert qui compare le signal (β), de sortie dudit deuxième régulateur (14) de la tension de sortie (U),avec un signal en dents de scie (γ) provenant dudit générateur (19) de dents de scie, comparateur (20 21) qui délivre à sa sortie un signal (α) dont le rapport cyclique entre la valeur Haut/Bas diminue quand le signal (β) issu dudit deuxième régulateur (14) de la tension de sortie augmente suite à une baisse de la tension de sortie (U), et inversement quand cette tension de sortie augmente (figure 6a) ;
- un opérateur (100) qui délivre à sa sortie un signal (θ) qui est la division, par le signal de sortie (α) dudit comparateur (20 21), du signal (i_{L}) de mesure du courant (I_{L}=) d'alimentation redressé provenant d'un traducteur de courant (9), comme par exemple un shunt ;
- un module de filtrage passe bas (22) de réjection des fréquences élevées ayant à son entrée ledit signal (θ) de sortie dudit opérateur (100) et à sa sortie un signal continu (δ);
- le régulateur de tension (11) pour la régulation de la tension (V) d'entrée, reçoit à son entrée un signal d'erreur (ρ) issu d'un additionneur (10) qui additionne ledit signal (δ) de consigne de la tension d'entrée (V) issue du module de filtrage (22) avec la mesure de cette tension d'entrée, avec un signe négatif (-v), mesure issue d'un traducteur de mesure (8), comme par exemple un diviseur résistif de tension suivi d'un inverseur de signe ;
- le régulateur (11) délivre à sa sortie un signal (R) de consigne pour un régulateur subordonné de courant (17) ;
- le régulateur subordonné (17) du courant (I_{T}) passe dans ledit transistor (5), et reçoit à son entrée un signe d'erreur (λ) issu d'un additionneur (16) qui additionne le signal (R) de sortie dudit régulateur (11) de la tension d'entrée (V) avec le signal négatif (-i_{T}) issu d'un traducteur de mesure (15) du courant (I_{T}) passant par ledit transistor (5), comme par exemple un shunt ;
- un deuxième comparateur (18) reçoit à ses entrées le signal (S) de sortie dudit régulateur (17) du courant qui passe par ledit transistor (5), et le signal en dents de scie (γ) issu dudit générateur de dents de scie (19) ;
- le signal de sortie (Q) de ce deuxième comparateur (18), obtenu par l'intersection dudit signal en dents de scie (γ) avec le signal (S) de sortie dudit régulateur de courant (17) commande ledit transistor (5) par une interface de commande rapprochée (23) et détermine ainsi le rapport cyclique du temps de conduction (tₒₙ/t_{off}) dudit transistor (5), rapport qui diminue quand le signal (R) de sortie dudit régulateur (11) de la tension d'entrée diminue suite à une baisse de la tension de sortie (U) et qui à l'inverse augmente quand la tension de sortie (U) augmente (figure 6b) ;
- le collecteur/drain dudit commutateur (5) est relié d'une part entre ledit inducteur (3) et l'anode de ladite diode (4) qui le suit par un inducteur (26) et relié d'autre part à un condensateur de décharge (27) ;
- une diode de décharge (25) est reliée d'une part entre ledit inducteur (3) et l'anode de ladite diode (4) qui le suit et reliée d'autre part au collecteur/drain dudit commutateur (5) ;
- l'autre extrémité dudit condensateur de décharge (27) est reliée à une deuxième diode de décharge (28) dont la cathode est réunie au pôle positif de sortie du convertisseur ;
- un troisième inducteur (30) ayant une extrémité reliée à l'émetteur/source dudit commutateur (5) et l'autre extrémité reliée à l'anode d'une troisième diode (29) dont la cathode est reliée à l'anode de la dite deuxième diode de décharge (28).

7. Dispositif électronique selon la revendication 1 avec suppression des pertes de commutation, **caractérisé en ce que** (figure 7) :
- un pont redresseur double alternance (2) connecté sur la sortie d'un transformateur de courant (1) dont l'enroulement primaire (A-B) est inséré dans une ligne d'alimentation par un générateur de courant alternatif imposé de forme d'onde quelconque, alimente en courant redressé (I_{L}=) à travers un inducteur (3) suivi d'une diode (4), un condensateur de stockage d'énergie (6) en parallèle avec la charge (7) en sortie du pôle positif du convertisseur comprenant :
- un transistor (5) ayant son émetteur/source relié au pôle zéro de sortie du convertisseur ;
- le deuxième régulateur de tension (14) pour la régulation de la tension (U) de sortie du convertisseur, reçoit à son entrée un signal d'erreur (η) issu d'un additionneur (13) qui additionne la consigne (u_{R}) de la tension de sortie (U) avec le signal de mesure (u) de cette tension de sortie (U), tension mesurée par un traducteur de tension (12), comme par exemple un diviseur résistif de tension ;
- un générateur (19) de dents de scie ;
- un comparateur (20 21) avec sortie par collecteur ouvert qui compare le signal (β) de sortie dudit deuxième régulateur de tension de sortie (14) avec un signal en dents de scie (γ) issu d'un générateur (19) de dents de scie, comparateur (20 21) qui délivre à sa sortie un signal (τ) dont le rapport cyclique entre la valeur Haut/Bas augmente quand le signal (β) issu dudit régulateur (14) de la tension de sortie diminue suite à une baisse de la tension de sortie (U), et inversement quand cette tension de sortie augmente (figure 8a) ;
- un opérateur (101) qui délivre à sa sortie un signal (µ) qui est la multiplication du signal de sortie (τ) dudit comparateur (20 21) avec le signal (v) de mesure de la tension (u) d'entrée redressée (V) issue d'un traducteur de tension (8), comme par exemple un diviseur résistif de tension ;
- un filtre (22) de réjection des fréquences élevées ayant à son entrée le signal (µ) issu dudit opérateur (101), et qui, suivi d'un inverseur de signe (102), délivre à la sortie de ce dit inverseur de signe (102) un signal lissé (-δ) ;
- le régulateur de tension (11) pour la régulation de la tension (V) d'entrée qui reçoit à son entrée un signal d'erreur (ρ) issu d'un additionneur (24) qui additionne pour la mesure de la tension d'entrée (V) le signal (-δ) issu dudit inverseur de signe (102) avec le signal de consigne pour ledit régulateur de tension (11), qui est le signal (i_{L}) issu d'un traducteur de mesure (9) du courant d'alimentation (I_{L}) du convertisseur ;
- un régulateur subordonné (17) du courant qui passe dans le dit transistor (5) et qui reçoit à son entrée un signal d'erreur (λ) issu d'un additionneur (16) qui additionne, comme référence de courant, le signal (R) de sortie dudit régulateur (11) de la tension d'entrée (V) avec le signal négatif (i_{T})/ issu d'un traducteur de mesure (15) du courant (-I_{T}) passant par ledit transistor (5) ;
- un deuxième comparateur (18) qui compare à ses entrées le signal (S) de sortie dudit régulateur (17) du courant qui passe par ledit transistor (5) avec le signal en dents de scie (γ) issu dudit générateur de dents de scie (19) ;
- le signal de sortie (Q) de ce deuxième comparateur (18),
obtenu par l'intersection dudit signal en dents de scie (v) avec le signal (S) de sortie dudit régulateur de courant (17), qui commande ledit transistor (5), par une interface de commande rapprochée (23) et détermine le rapport cyclique du temps de conduction (tₒₙ/t_{ofE}) dudit transistor (5). rapport qui diminue
quand le signal (R) de sortie dudit régulateur (11) de la tension d'entrée diminue suite à une baisse de la tension de sortie (U) et à l'inverse augmente quand la tension de sortie (U) augmente (fig. 8b) ;
- le collecteur/drain dudit commutateur (5) est relié d'une part entre ledit inducteur (3) et l'anode de la dite diode (4) qui le suit par un inducteur (26) et relié d'autre part à un condensateur de décharge (27);
- une diode de décharge (25) est reliée d'une part entre ledit inducteur (3) et l'anode de ladite diode (4) qui le suit et reliée d'autre part au collecteur/drain dudit commutateur (5) ;
- l'autre extrémité dudit condensateur de décharge (27) est reliée à une deuxième diode de décharge (28) dont la cathode est réunie au pôle positif de sortie du convertisseur ;
- un troisième inducteur (30) ayant une extrémité reliée à l'émetteur/source dudit commutateur (5) et l'autre extrémité reliée à l'anode d'une troisième diode (29) dont la cathode est reliée à l'anode de ladite deuxième diode de décharge (28).

## Claims

1. Electronic device supplied by current source which impresses upon this device a current of any value and any wave-form (i_{L}≈), **characterized by** the fact that a regulator (11) for the input voltage (V) impresses upon this voltage a wave-form identical to the wave-form of the said supply current, said current constituting the reference of this input voltage regulator, and by the fact that a second regulator (14) for the output voltage (U), of said electronic device, maintains the output voltage at a preselected value, by varying the input voltage under the action of the output signal (β), of this second regulator which acts on the reference of the input voltage regulator.

2. Electronic device according to claim 1, (figure 1) **characterized in that**:
- a bridge rectifier (2) supplied by an a.c. current generator with an imposed arbitrary shape wave-form (I_{L}≈), provided by an a.c. current generator, which feeds with a rectified current (I_{L}=) an inductor (3) followed by a diode(4), an energy storage capacitor (6) in parallel with the load (7) of the output of the positive pole of the converter;
- a sensor (9) measuring the supplied rectified current (I_{L}=) of the converter;
- the second regulator (14) for the output voltage (U) which receives at its input a signal (η) issued from an adder (13) which adds two magnitudes of opposite signs, one being the reference value(U_{R}) for the output voltage and the other the measurement (-u) of this output voltage (U);
- an operator (100) which divides or multiplies the output signal (i_{L}) of the said measure sensor (9) of the rectified supply current (I_{L}=) by the signal (β), which is the output of the said regulator (14) of the output voltage (U), division or multiplication depending on the chosen ratio between input and output of the said current measuring sensor (9);
- the output signal (ρ) of the said adder (10), is the input of the said regulator (11) for the input voltage (V);
- the output signal (R) of the said input voltage regulator (11), of the voltage (V), which controls by means of a driven interface (23) a switch (5) which has its emitter/source connected to the zero pole of the output of the converter and its collector/drain to the anode of the said diode (4).

3. Electronic device according to claim 2 (figure 2) **characterized by** the fact that a subordinate current loop is inserted between the said input voltage regulator (11), of the voltage (V), and the driving interface (23) of the switch (5), including a current regulator (17), whose output (S) drives the said interface (23), and whose input receives a signal (λ) issued from an adder (16), that adds the output signal (R) of the said regulator (11) of the input voltage and the measurement signal (-i_{T}) of the current (I_{T}), which flows through the said switch (5).

4. Electronic device according to claim 1 **characterized in that** (figure 3):
- a bridge rectifier (2) supplied by an a.c. current generator with an impressed arbitrary wave-shape (I_{L}≈), feeding with a rectified current ((I_{L}=) an inductor (3) followed by a diode(4), and energy storage capacitor (6) in parallel with the load (7) of the output of the positive pole of the converter;
- a sensor (8) measuring the supplied rectified voltage (V) of the converter;
- the second regulator (14) for the output voltage (U)receiving at its input a signal (η) issued from an adder (13) which adds two magnitudes of opposite signs, one being the value of the reference (U_{R}) for the output voltage, and the other the measure (-u) of this output voltage (U);
- an operator (101) which multiplies or divides the output signal (v) of the said measure-sensor (8) of the input voltage (V) by the output signal (β) of the said output voltage (U) regulator (14), multiplication or division depending of the chosen ratios between input and output of the said input voltage (V) measuring sensor (8;
- an adder (24), which adds two magnitudes of opposite signs, one (-δ) being the output signal (µ) of the said operator (101) follow-up by an inverter (102), and the other being the value (i_{L}) of the rectified supply current (I_{L}≈) of the converter, value issued from the said measure sensor (9);
- the output signal (ρ), of the said adder (24),which is the input of the said regulator (11) of the input voltage (V);
- the output signal (R), of the said voltage regulator (11) for the input voltage, acting by means of a driven interface (23) on a switch (5) which has its emitter/source connected to the zero pole of the output of the converter, and its collector/drain to the anode to the said diode (4).

5. Electronic device according to claim 4 (figure 4) **characterized by** the fact that a subordinate current loop is inserted between the said input voltage regulator (11), of the voltage (V), and the driving interface (23) for the switch (5, including a current regulator (17) whose output (S) drives the said interface (23), and whose input receives a signal (λ) issued from an adder (16), that adds the output signal (R) of the said regulator (11) of the input voltage and the measurement signal (-i_{T}) of the current (I_{T}), which flows through the said switch (5).

6. Electronic device according to claim 1 with suppressed commutating loses **characterized in that** (figure 5):
- a full bridge rectifier (2) connected to the output of a current transformer (1) with its primary winding (A-B) inserted into a supply line carrying an impressed current of an arbitrary wave-form, provided by an a.c. current generator, which feeds with a rectified current (I_{L}=), an inductor (3), followed by a diode(4), an energy storage capacitor (6) in parallel with the load (7) of the output positive pole of the converter;
- a transistor (5) having its emitter /source connected to the converter output zero pole;
- the second voltage regulator (14) for the converter output voltage (U) receiving at its input an error signal (η) issued from an adder (13) which adds the reference (U_{R}) for the output voltage (U) to the measure (u) of this output voltage (U), measured by means of a voltage sensor (12) as for instance a resistive voltage divisor;
- sawtooth generator (19);
- a comparator (20 21) with an open output collector compares the output signal (β) of the said second regulator (14),of the output voltage (U) with a sawtooth signal (γ) issued from the said sawtooth generator (19), said comparator (20 21) delivers at its output a signal (α) with a duty cycle rate between values High/Low which decreases when the signal (β) coming from the said second output regulator (14) increases, due to a decrease of the output voltage (U), and inversely when this output voltage increases (figure 6a);
- an operator (100) which delivers at its output a signal (θ) which is the division by the output signal (α), of the said comparator (20 21), the measure signal (i_{L}) of the rectified supply current (I_{L}=) issued from a current sensor (9), a shunt for instance;
- a module of low pass filter (22), rejecting the high frequencies, having at its input the said output signal (θ) of the operator (100) and at its output a continuous signal (δ);
- the input voltage regulator (11), for the voltage (V), receives at its input an error signal (ρ) issued from an adder (10) which adds the said reference signal (δ) for the input voltage (V), issued from the filtering module (22), with the measure of this input voltage, with a negative sign (-v), measure issued from a measure sensor (8), for instance a resistive voltage divisor, followed by a sign inverter;
- the regulator (11) delivering at its output a reference signal (R) for the subordinated current regulator (17);
- the subordinated regulator (17) for the current (I_{T}) which flows through the said transistor (5) and receives at its input an error signal (λ) issued from an adder (16) which adds the output signal (R) of the said regulator (11) of the input voltage (v), with the negative signal (-i_{T}) issued from a measure sensor (15) of the current (I_{T}) which flows through the said transistor (5), a shunt for instance;
- a second comparator (18) receiving at its inputs the output signal (S) of the said regulator (17), of the current which flows via the said transistor (5), and the sawtooth signal (γ) issued from the said sawtooth generator (19);
- the output signal (Q) of this second comparator (18), obtained by the intersection of this said sawtooth signal (γ) with the output signal (S) of the said current regulator (17), driving the said switch (5) through a driving interface (26) and fixes thereby the rate of the duty cycle of the time conduction (ton/toff) of the said switch (5), rate which decreases when the output signal (R) of the said regulator (11) of the input voltage decreases due to the decrease of the output voltage (U) and which inversely increases when the output voltage (U) increases (figure 6b);
- the collector/drain of the said switch (5) which is connected, once between the said inductor (3) and the following anode of the said diode (4) through an inductor (26), and secondly at a discharge capacitor (27);
- a discharge diode (25) which is connected, once between the said inductor (3) and the anode of the said diode (4),which follows it, and secondly on the collector/drain of the said switch (5);
- the other end of the said discharge capacitor (27) which is connected to a second discharge diode (28) which has its cathode connected to the positive output pole of the converter;
- a third inductor (30)having one extremity connected to the emitter/source of the said switch (5), and the other extremity connected to the anode of a third diode (29) which has its cathode connected to the anode of the said second discharge diode (28).

7. Electronic device according to claim 1 with suppressed commutating **characterized in that** (figure 7):
- a full bridge rectifier (2) connected to the output of a current transformer (1) with its primary winding (A-B) inserted into a supply line carrying an impressed current of an arbitrary wave form, provided by an a.c. current generator, feeds with a rectified current (I_{L}=), an inductor (3), followed by a diode(4), and energy storage capacitor (6) in parallel with the load (7) of the output of the positive pole of the converter comprising:
- a transistor (5) having its emitter /source connected to the output zero pole of the converter;
- the second regulator (14) for the output voltage (U) of the converter receiving at its input an error signal (η) issued from an adder (13) which adds the reference (U_{R}) of the output voltage (U) with the measure (u)of this output voltage (U), measured with a voltage measurement sensor (12) as for instance a resistive voltage divisor;
- a sawtooth generator (19);
- a comparator (20 21) with an open output collector which compares the output signal (β) of the said second regulator (14), with a sawtooth signal (γ) issued from a sawtooth generator (19), said comparator (20 21) delivers at its output a signal (τ) with a duty cycle rate between values High/Low which increases when the signal (β) issued from the second output regulator (14) decreases, due to a decrease of the output voltage (U), and inversely when this output voltage increases (figure 8a);
- an operator (101) delivering at its output a signal (µ) which is the multiplication of the output signal (τ) of the said comparator (20 21), with the signal (v) of the voltage measure (u) of the input rectified voltage (V), issued from a voltage sensor (8), a resistive voltage divisor for instance;
- a module of low pass filter (22), for rejecting the high frequencies, having at its input the signal (µ) coming from the said operator (101) and followed by a sign inverter (102), delivering at the output of the said sign inverter (102) a smoothed signal (-δ) ;
- the regulator (11), for the control of input voltage (V), which receives at its input an error signal (ρ) issued from an adder (24) which adds, as measure of the input voltage (V) the signal (-δ) issued from the said sign inverter (102), with the reference signal for the said voltage regulator (11), which is the signal (i_{L}) issued from a measure sensor (9) of the converter supply current (I_{L});
- the subordinated regulator (17) for the current travelling the said transistor (5) and which receives at its input an error signal (λ) issued from an adder (16) which adds as a current reference the output signal (R) of the said regulator (11) of the input voltage (V) with the negative signal (i_{T}) issued from a measure sensor (15) of the current (-I_{T}) flowing through the said transistor (5);
- a second comparator (18) which compares at its inputs, the output signal (S) of the said regulator (17) of the current flowing through the said transistor (5), with the sawtooth signal (γ) come from the said sawtooth generator (19) ;
- the output signal (Q) of this second comparator (18), obtained by the intersection of the said sawtooth signal (γ) with the output signal (S) of the said current regulator (17), driving the said switch (5) through a driving interface (23) and set thereby the rate of the duty cycle of the time conduction (ton/toff) of the said switch (5), rate which decreases when the output signal (R) of the said regulator (11) of the input voltage decreases due to a decrease of the output voltage (U) and which inversely increases when the output voltage (U) increases (figure 8b);
- the collector/drain of the said switch (5) which is connected, once between said inductor (3) and the anode of the said diode (4) which follows on an inductor (26), and second at a discharge capacitor (27);
- a discharge diode (25) is connected, once between the said inductor (3) and the anode of the said diode (4) which follows it, and secondly on the collector/drain of the said switch (5);
- the other end of the said discharge capacitor (27) which is connected to a second discharge diode (28) which has its cathode connected to the positive output pole of the converter;
- a third inductor (30) having, one extremity connected to the emitter/source of the said switch (5), and the other extremity connected to the anode of a third diode (29) which has its cathode connected to the anode of the said second discharge diode (28).

## Patentansprüche

1. Elektronische Vorrichtung bespeist durch eine Stromquelle welche ihr einen Strom beliebigen Wertes und beliebiger Wellenform (i_{L}) auferlegt, **dadurch gekennzeichnet, dass** ein Regler (11) für die Eingansspannung (V) dieser Spannung eine identische Wellenform mit derjenigen des Eingangsstromes auferlegt, genannt Referenzstrom dieses Eingangsspannungs-Reglers und dass ein zweiter Regler (14) für die Ausgangsspannung (U) der genannten elektronischen Vorrichtung die Ausgangsspannung konstant aufrechterhält durch Änderung der Eingangsspannung unter Wirkung des Ausgangssignals (β) dieses zweiten Reglers, welcher auf die Referenz des Eingangsspannung-Reglers wirkt.

2. Elektronische Vorrichtung nach Anspruch 1, ferner durch **gekennzeichnet** (Abbildung 1):
- eine Gleichrichterbrücke (2), versorgt durch einen Wechselstromgenerator mit beliebiger Wellenform (I_{L}≈), welche mittels eines Induktors (3), in Reihe geschaltet mit einer Diode (4), einen Kondensator (6), welcher dem Zwecke der Energiespeicherung dient und parallelgeschaltet mit der Ladung (7) am Ausgang des Pluspoles des Konverters ist, mit Gleichstrom (I_{L}=) versorgt;
- eine Messeinrichtung (9) des gleichgerichteten Stromes (I_{L}=), mit welchem der Konverter versorgt wird;
- einen zweiten Regler (14) für die Ausgangsspannung (U), welcher bei seinem Eingang ein Signal (η) eine zwei Größen verschiedener Vorzeichen summierenden Summierstelle (13) erhält, wobei die eine den Sollwert (u_{R}) für die Ausgangsspannung und die andere den Istwert (-u) dieser Ausgangsspannung (U) darstellt;
- einen Operator (100), welcher das Ausgangssignal (i_{L}) besagte Maßübersetzer (9) des Gleichstromes (I_{L}=), mit welchem der Konverter versorgt wird, durch das oder mit dem Ausgangssignal (β) besagten Reglers (14) der Ausgangsspannung (U) dividiert oder multipliziert, wobei Division oder Multiplikation Funktion des gewählten Quotienten aus Eingang und Ausgang besagten Messeinrichtung (9) des Stromes sind;
- eine Summierstelle (10), welche zwei Größen verschiedener Vorzeichen summiert, wobei die eine (θ) den Ausgang besagten Operators (100), die andere den Istwert (-v) der gleichgerichteten Eingangsspannung (V), welche der Messeinrichtung (8) entstammt, darstellt;
- das Ausgangsignal (ρ) besagter Summierstelle (10), welches das Eingangssignal besagten Reglers (11) der Eingangsspannung (V) darstellt;
- das Ausgangsignal (R) besagten Reglers (11) der Eingangsspannung (V), welches mittels einer Treiberstufe (23) einen Kommutator (5) anweist, dessen Emitter/Source mit dem Nullpol des Ausgangs des Konverter und dessen Kollektor/Drain mit der Anode besagter Diode (4) verbunden ist.

3. Elektronische Vorrichtung nach Anspruch 2 (Abbildung 2), **dadurch gekennzeichnet, dass** zwischen dem Ausgang besagten Reglers (11) der Eingangsspannung (V) und der Treiberstufe (23) des Kommutators (5) ein untergeordneter Stromkreis eingefügt ist, welcher einen Stromregler (17) enthält, dessen Ausgang (S) besagte Treiberstufe (23) anweist und dessen Eingang ein Signal (λ) erhält, welches einer Summierstelle (16) zwischen dem Signal (R) des Ausgangs besagten Reglers (11) der Eingangsspannung und dem Istwertsignal (-i_{T}) des durch den Kommutator (5) fließenden Stromes (I_{T}) entstammt.

4. Elektronische Vorrichtung nach Anspruch 1, ferner **dadurch gekennzeichnet** (Abbildung 3):
- eine Gleichrichterbrücke (2), versorgt durch einen Wechselstromgenerator mit beliebiger Wellenform (I_{L}≈), welche mittels eines Induktors (3), in Reihe geschaltet mit einer Diode (4), einen Kondensator (6), welcher dem Zwecke der Energiespeicherung dient und parallelgeschaltet mit der Ladung (7) am Ausgang des Pluspoles des Konverters ist, mit Gleichstrom (I_{L}=) versorgt;
- eine Meßeinrichtung (8) der gleichgerichteten Eingangsspannung (V), mit welcher der Konverter versorgt wird;
- den zweiten Regler (14) für die Ausgangsspannung (U), welcher bei seinem Eingang ein Signal (η) einer zwei Größen verschiedener Vorzeichen summierenden Summierstelle (13) erhält, wobei die eine den Sollwert (u_{R}) für die Ausgangsspannung und die andere den Istwert (-u) dieser Ausgangsspannung (U) darstellt;
- einen Operator (101), welcher das Ausgangssignal (v) besagter Messeinrichtung (8) der Eingangsspannung durch das oder mit dem Ausgangssignal (β) besagten Reglers (14) der Ausgangsspannung (U) dividiert oder multipliziert, wobei Division oder Multiplikation Funktion des gewählten Quotienten aus Eingang und Ausgang besagter **Übersetzer6** (8) der Eingangsspannung (V) sind;
- eine Summierstelle (24), welcher zwei Größen verschiedener Vorzeichen summiert, wobei die eine (-δ) das Ausgangssignal (µ) besagten Operators (101), welcher mit einem Vorzeichenumkehr (102) in Reihe geschaltet ist, die andere den Istwert (i_{L}) des Gleichstromes (i_{L}=), mit welchem der Konverter versorgt wird, besagter Istwert der Messeinrichtung (9) entstammend, darstellen;
- das Ausgangssignal (ρ) besagter Summierstelle (24), welches das Eingangssignal besagten Reglers (11) der Eingangsspannung (V) darstellt;
- das Ausgangssignal (R) besagten Reglers (11) der Eingangsspannung (V), welches mittels einer Treiberstufe (23) einen Kommutator (5) anweist, dessen Emitter/Source mit dem Nullpol des Ausgangs des Konverters und dessen Kollektor/Drain mit der Anode besagter Diode (4) verbunden ist.

5. Elektronische Vorrichtung nach Anspruch 4, (Abbildung 4) **dadurch gekennzeichnet, dass** zwischen dem Ausgang besagten Reglers (11) der Eingangsspannung (V) und der Treiberstufe (23) des Kommutators (5) ein untergeordneter Stromkreis eingefügt ist, welcher einen Stromregler (17) enthält, dessen Ausgang (S) besagten Kommutator (5) anweist und dessen Eingang ein Signal (λ) erhält, welches einer Summierstelle (16) zwischen dem Signal (R) des Ausgangs besagten Reglers (11) der Eingangsspannung und dem Istwertsignal (-i_{T}) des durch den Kommutator (5) fließenden Stromes (I_{T}) entstammt.

6. Elektronische Vorrichtung nach Anspruch 1 bei Unterdrückung der Umschaltungsverluste, **dadurch gekennzeichnet** (Abbildung 5):
- eine Vollweg-Gleichrichterbrücke (2), verbunden mit dem Ausgang eines Stromtransformators (1), dessen Primärwicklung (A-B) in ein Versorgungsnetz mittels eines Wechselstromgenerators mit beliebiger Wellenform (I_{L}≈) eingefügt ist, welche mittels eines Induktors (3), in Reihe geschaltet mit einer Diode (4), einen Kondensator (6), welcher dem Zwecke der Energiespeicherung dient und parallelgeschaltet mit der Ladung (7) am Ausgang des Pluspoles des Konverter ist, mit Gleichstrom (I_{L}=) versorgt;
- einen Transistor (5) dessen Emitter/Source mit dem Nullpol des Ausgangs des Konverters verbunden ist;
- den zweiten Regler (14) für die Ausgangsspannung (U) des Konverters welcher bei seinem Eingang ein Fehlersignal (η) einer Summiererstelle (13) erhält, welche den Sollwert (u_{R}) der Ausgangsspannung (U) und den Istwert (u) dieser Ausgangsspannung (U) addiert, gemessen mit Hilfe einer Messeinrichtung (12), wie zum Beispiel eines widerstandsbasierten Spannungsteilers;
- einen Sägezahngenerator (19);
- einen Komparator (20-21) mit offenem Kollektor, welcher das Ausgangssignal (β) besagten zweiten Reglers der Ausgangsspannung (U), mit einem Sägezahnsignal (γ), welches besagtem Sägezahngenerator entstammt (19), vergleicht, und bei seinem Ausgang ein Signal (α) aussendet dessen zyklisches Verhältnis zwischen dem Wert Hoch/Tief dann abnimmt, wenn das Signal (β), welches besagtem zweiten Regler der Ausgangsspannung entstammt, aufgrund eines Absinkens der Ausgangsspannung (U) zunimmt, und umgekehrt zunimmt wenn diese Ausgangsspannung zunimmt (Abbildung 6a);
- ein Operator (100), welcher bei seinem Ausgang ein Signal (θ) aussendet, welches der Division durch das Ausgangssignal (α) des besagten Komparators (20-21) des Messsignals (i_{L}) des gleichgerichteten Bespeisungsstromes (i_{L}=) aus einer Messeinrichtung (9) kommend, wie zum Beispiel einem Shunt entspricht.
- einen Niederfrequenz Filter (22) zur Unterdrückung hoher Frequenzen, welcher an seinem Eingang das besagte Ausgangssignal (θ) des besagten Operators (100) und an seinem Ausgang ein stetiges Signal (δ) aufweist;
- den Spannungsregler (11) zur Regelung der Eingangsspannung (V), welcher bei seinem Eingang ein Fehlersignal (ρ) einer Summierstelle (10) erhält, welche besagtes Signal (δ) des Sollwertes der Eingangsspannung (V), welches dem Niederfrequenz Filter (22) entstammt, und den Istwert (-v) dieser Eingangsspannung, mit einem negativen Vorzeichen, addiert, gemessen mit Hilfe einer Messeinrichtung (8), wie zum Beispiel eines widerstandsbasierten Spannungsteilers, in Reihe geschaltet mit einem Vorzeichenumkehr;
- den Regler (11), welcher bei seinem Ausgang ein Signal (R) für den Sollwert für einen untergeordneten Stromregler (17) aussendet;
- den untergeordneten Stromregler (17) für den Strom (I_{T}), welcher besagten Transistor (5) durchfließt, und bei seinem Eingang ein Fehlersignal (λ) einer Summierstelle (16) erhält, welche das Ausgangsignal (R) des besagten Reglers (11) der Eingangsspannung (V) und das negative Signal (-i_{T}), welches einer Messeinrichtung (15) des Stromes (I_{T}) entstammt, welcher durch besagten Transistor (5) fließt, wie zum Beispiel einem Shunt addiert;
- einen zweiten Komparator (18), welcher bei seinen Eingängen das Ausgangssignal (S) besagten Reglers (17) des Stromes, welcher besagten Transistor (5) durchfließt und das Sägezahnsignal (γ), welches besagtem Sägezahngenerator (19) entstammt, erhält;
- das Ausgangssignal (Q) des zweiten Komparators (18), erhalten durch den Schnittpunkt besagten Sägezahnsignals (γ) mit dem Ausgangssignal (S) besagten Reglers (17), welches besagte Transistor (5) mittels einer Treiberstufe (23) anweist und das zyklische Verhältnis zwischen der Einschaltzeit (tₒₙ/t_{off}) besagten Transistors (5) derart determiniert, dass das Verhältnis dann abnimmt, wenn das Ausgangssignal (R) besagten Reglers (11) der Eingangsspannung aufgrund eines Absinkens der Ausgangsspannung (U) abnimmt, und umgekehrt zunimmt, wenn diese Ausgangsspannung zunimmt (Abbildung 6b);
- den Kollektor/Drain besagten Kommutators (5), der einerseits zwischen dem besagten Induktor (3) und der Anode besagter Diode (4) mittels einem in Reihe geschalteten Induktors (26), und andererseits mit einem Entladungskondensator (27) verbunden ist;
- eine Entladungsdiode (25), welche einerseits zwischen dem besagten Induktor (3) und der Anode besagter Diode (4), welche mit diesem in Reihe geschaltet ist, und andererseits mit dem Kollektor/Drain besagten Kommutators (5) verbunden ist;
- die andere Extremität besagten Entladungskondensators (27, welche mit einer zweiten Entladungsdiode (28) verbunden, deren Kathode mit dem Pluspol am Ausgang des Pluspoles des Konverter vereinigt ist;
- einen dritten Induktor (30), dessen eine Extremität mit dem Emitter/Source besagten Kommutators (5) und die andere mit der Anode einer dritten Diode (29), deren Kathode mit der Anode besagter zweiter Entladungsdiode (28) verbunden ist.

7. Elektronische Vorrichtung nach Anspruch 1 bei Unterdrückung der Umschaltungsverluste, **dadurch gekennzeichnet** Abbildung 7):
- eine Vollweg-Gleichrichterbrücke (2), verbunden mit dem Ausgang eines Stromtransformators (1), dessen Primärwicklung (A-B) in ein Versorgungsnetz mittels eines Wechselstromgenerators mit beliebiger Wellenform (I_{L}≈) eingefügt ist, welche mittels eines Induktors (3), in Reihe geschaltet mit einer Diode (4), einen Kondensator (6), welcher dem Zwecke der Energiespeicherung dient und parallelgeschaltet mit der Ladung (7) am Ausgang des Pluspols des Konverter ist, mit Gleichstrom (I_{L}=) versorgt;
- einen Transistor (5) dessen Emitter/Source mit dem Nullpol des Ausgangs des Konverters verbunden ist;
- einen zweiten Regler (14) für die Ausgangsspannung (U) des Konverters, welcher bei seinem Eingang ein Fehlersignal (η) einer Summiererstelle (13) erhält, welche den Sollwert (u_{R}) der Ausgangsspannung (U) und den Istwert (u) dieser Ausgangsspannung (U) addiert, gemessen mit Hilfe einer Messeinrichtung (12), wie zum Beispiel eines widerstandsbasierten Spannungsteilers;
- einen Sägezahngenerator (19);
- einen Komparator (20-21) mit offenem Kollektor, welcher das Ausgangssignal (β) besagten zweiten Reglers (14) der Ausgangsspannung mit einem Sägezahnsignal (v), welches besagtem Sägezahngenerator entstammt (19), vergleicht, und bei seinem Ausgang ein Signal (τ) aussendet, dessen zyklisches Verhältnis zwischen dem Wert Hoch/Tief dann abnimmt, wenn das Signal (β), welches besagtem zweiten Regler (14) der Ausgangsspannung entstammt, aufgrund eines Absinkens der Ausgangsspannung (U) zunimmt, und umgekehrt zunimmt wenn diese Ausgangsspannung zunimmt (Abbildung (8a);
- einen Operator (101), welcher bei seinem Ausgang ein Signal (µ) aussendet, welches dem Produkt des Ausgangssignals (τ) besagten Komparators (20-21) mit dem Signal (v) des Istwerts (u) der gleichgerichteten Eingangsspannung (V) entspricht, wobei diese einer Messeinrichtung (8), wie zum Beispiel einem widerstandsbasierten Spannungsteiler, entstammt;
- ein Niedrigfrequenz Filter (22) zur Unterdrückung hoher Frequenzen, welcher an seinem Eingang das Signal (µ) des besagten Operators (101)aufweist und in Reihe geschaltet mit einem Vorzeichenumkehr (102), an seinem Ausgang ein stetiges Signal (-δ) aussendet;
- den Spannungsregler (11) zur Regelung der Eingangsspannung (V), welcher bei seinem Eingang ein Fehlersignal (ρ) einer Summierstelle (24) erhält, welche zum Zwecke der Ermittlung des Istwertes der Eingangsspannung (V) das Signal (-δ), welches besagtem Vorzeichenumkehr (102) entstammt, und den Sollwert für besagten Spannungsregler (11) addiert, wobei dieser Sollwert dem Signal (i_{L}) entspricht, welches der Messeinrichtung (9) des Gleichstromes (I_{L}) entstammt, mit welchem der Konverter versorgt wird;
- einen untergeordneten Stromregler (17) für den Strom (I_{T}), welcher besagten Transistor (5) durchfließt, und bei seinem Eingang ein Fehlersignal (λ) einer Summiererstelle (16) erhält, welche als Sollwert das Ausgangssignal (R) besagten Regulators (11) der Eingangsspannung (V) und das negative Signal (-i_{T}), welches einer Messeinrichtung (15) des Stromes (I_{T}) entstammt, welcher durch besagten Transistor (5) fließt, addiert;
- einen zweiten Komparator (18), welcher bei seinen Eingängen das Ausgangssignal (S) besagten Reglers (17) des Stromes, welcher besagten Transistor (5) durchfließt und das Sägezahnsignal (v), welches besagtem Sägezahngenerator entstammt (19 vergleicht;
- das Ausgangssignal (Q) des zweiten Komparators (18), erhalten durch den Schnittpunkt besagten Sägezahnsignals (v) mit dem Ausgangssignal (S) besagten Stromreglers (17), welches besagte Transistor (5) mittels einer Treiberstufe (23) anweist und das zyklische Verhältnis zwischen der Schaltzeit (tₒₙ/t_{off}) des besagten Transistors (5) derart determiniert, dass das Verhältnis dann abnimmt, wenn das Ausgangssignal (R) besagten Regulators (11) der Eingangsspannung aufgrund eines Absinkens der Ausgangsspannung (U) abnimmt, und umgekehrt zunimmt wenn diese Ausgangsspannung zunimmt (Abbildung 8b);
- den Kollektor/Drain besagten Kommutators (5), der einerseits zwischen dem besagten Induktor (3) und der Anode besagter Diode (4) mittels einem in Reihe geschalteten Induktors (26), und andererseits mit einem Entladungskondensator (27) verbunden ist;
- eine Entladungsdiode (25), welche einerseits zwischen dem besagten Induktor (3) und der Anode besagter Diode (4), welche mit diesem in Reihe geschaltet ist, und andererseits mit dem Kollektor/Drain besagten Kommutators (5) verbunden ist;
- die andere Extremität besagten Entladungskondensators (27), welche mit einer zweiten Entladungsdiode (28) verbunden ist, deren Kathode mit dem Pluspol am Ausgang des Pluspoles des Konverters vereinigt ist;
- einen dritten Induktor (30), dessen eine Extremität mit dem Emitter/Source besagten Kommutators (5) und die andere mit der Anode einer dritten Diode (29), deren Kathode mit der Anode besagter zweiter Entladungsdiode (28) verbunden ist.
